# EUROPEAN PATENT APPLICATION

(11) **EP 1 443 402 A1**
(43) Date of publication of application: **04.08.2004**
(21) Application number: 02785929.7
(22) Date of filing: 22.10.2002
(51) Int. Cl.: G06F 12/00, G06F 15/00

(54) **INFORMATION CONTROL SYSTEM, SERVER FOR INFORMATION CONTROL SYSTEM, AND INFORMATION TERMINAL FOR INFORMATION CONTROL SYSTEM**

(30) Priority: 22.10.2001 JP 2001323489
(71) Applicant: AISIN AW CO., LTD., Anjo-shi Aichi 444-1192 (JP)
(72) Inventor: YAMAZAKI, Kiyonobu, c/o Aisin AW Co., Ltd., Okazaki-shi, Aichi 444-8564 (JP)
(74) Representative: Leson, Thomas Johannes Alois, Dipl.-Ing.
(86) International application number: PCT/JP2002/010928
(87) International publication number: WO 2003/040925

(57) **Abstract**

An information management system according to the present invention comprising: an information terminal including an input device from which information is inputted, a storage device in which the information is stored, and transmit-receive device; a server including a storage device into which the information is stored and a transmit-receive device, whereby doing information-synchronization with the information terminal; wherein, the information held by the storage device in the information terminal is deleted upon set of a deletion flag (32) as to the information held by the storage device in the server; and further wherein synchronization (conformity) between information held by the information terminal and information held by the information management server can be maintained irrespective of an information-deletion process.

## Description

### [Field of the Invention]

The present invention relates to an information management system, an information management system server, and an information management system terminal.

### [Background of the Invention]

There have been conventional navigation apparatuses for a vehicle such as an automobile, wherein an optimum route from a user-selected departure point to a user-selected destination is searched based on road map data and the searched route is displayed on a display screen. In this optimum route search, a route which running the shortest distance or a route which taking the shortest time from the start point to the destination is searched.

One of the conventional navigation apparatuses employs a road traffic information communication system under which road traffic information is transmitted to the navigation apparatus so that a route circumventing congested areas on roads could be searched. At present, such road traffic information communication system is actualized in VICS® (Vehicle Information and Communication System), for example. In VICS, the traffic information as to traffic congestion is transmitted to the navigation apparatus via communication means; said traffic information bases on other source information collected by means of a traffic regulatory system controlled by the police, the Japan Highway Traffic Corporation, or the like. Under VICS, upon receipt of the traffic information, the navigation apparatus starts to search for a route that circumvents the traffic congestion areas.

Further, one of the conventional navigation apparatuses employs an information management system in which the navigation apparatus communicates with an information management server in order that a user (driver) of the vehicle may store the information such as his/her own schedules or memos into the information management server. To use such information management system, any information terminal must be preliminarily registered with the information management server. Generally, the information terminal is a navigation apparatus aboard a vehicle such as an automobile, a truck, a bus, a motorcycle, or the like. Alternatively, the information terminal may be any one of the followings; an in-car navigation apparatus, a stationary telephone, a portable telephone, a personal handy phone (used in PHS: Personal Handy-Phone System constructed by NTT, or Nippon Telegraph and Telephone Corporation), a portable information terminal, a PDA (Personal Digital Assistant), a personal computer, a game machine, and a digital television. Under said information management system, the user is allowed to access the information management server from a plurality of his/her registered information terminals. To sum up, the user's schedule inputted from each information terminal is stored into the information management server, which allowing the user to keep track of his/her upcoming schedule on an anytime basis by accessing the information management server from the terminal.

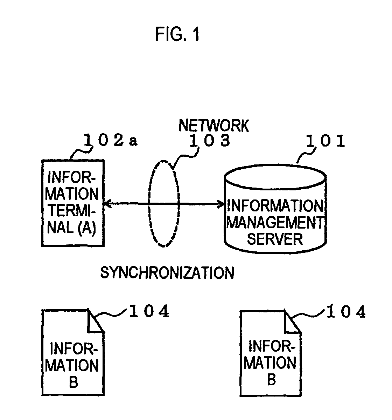

**FIG.1** illustrates a first exemplary working of a conventional information management system.

In **FIG.1**, there shown an information management server **101** comprising arithmetic means, storage means, communication means, and the like. Further, there shown an information terminal (A) **102a** comprising input means, arithmetic means, storage means, communication means, display means, and the like. The information terminal (A) **102a** may be an in-car navigation apparatus, a stationary telephone, a portable telephone, a personal handy phone (used in PHS), a portable information terminal, a PDA (Personal Digital Assistant), a personal computer, a game machine, or a digital television. To be owned by one and the same person, the terminal (A) **102a** should be registered with the information management server **101** before its use. The terminal (A) **102a** is designed to be able to access the server **101** over a network **103** so as to store/obtain information such as a schedule into/from the server **101**.

The server **101** and the terminal (A) **102a** are synchronized with each other at specific intervals in order that pieces of information respectively held by them can be exactly the same. As a result, synchronization (conformity) between information held by the server **101** and information held by the terminal (A) **102a** is maintained. In this case, the information stored in the server **101** is regarded as the original information. For example, when the information stored in the terminal (A) **102a** is updated, the server **101** is accessed and the original information stored therein is synchronized with the updated information in the terminal (A) **102a**. Said synchronization process is carried out automatically at given intervals; alternatively, carried out every time the user operates the terminal (A) **102a**.

By aforesaid information synchronization, as illustrated in **FIG.1**, the information respectively stored in the terminal (A) **102a** and the server **101** turns out to be the same information, i.e., information (B) **104.**

Such information synchronization, however, is not always done precisely. Under the conventional information management system, imprecise synchronization is sometimes done because a user is allowed to use a plurality of the information terminals; this causes the server **101** to be synchronized with plural information terminals confusedly. In such case, the synchronization (conformity) between the original information held by the server **101** and the information stored in each terminal tends to be lost. Such loss of information synchronization occurs especially when the original information is deleted.

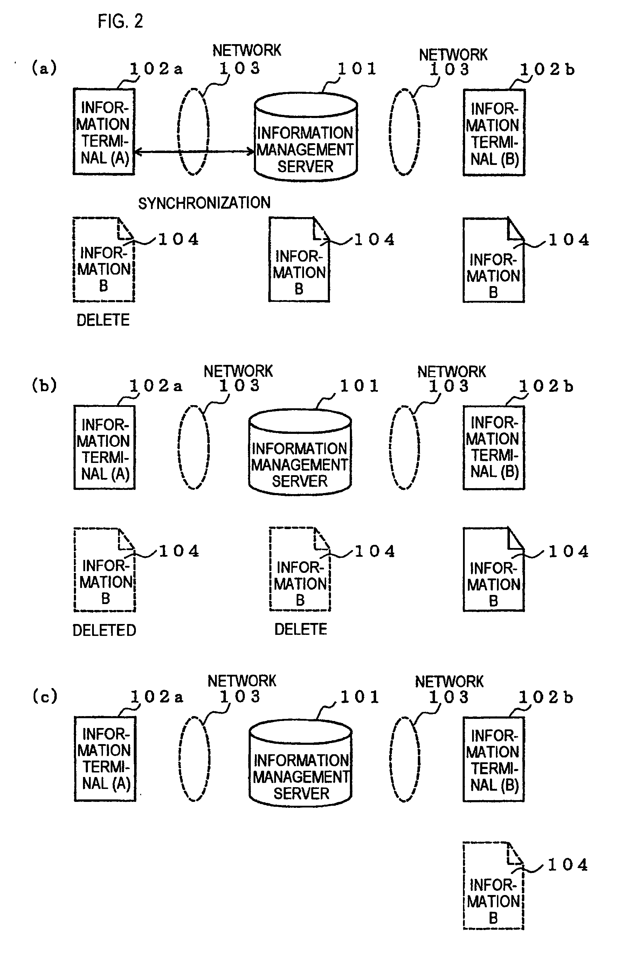

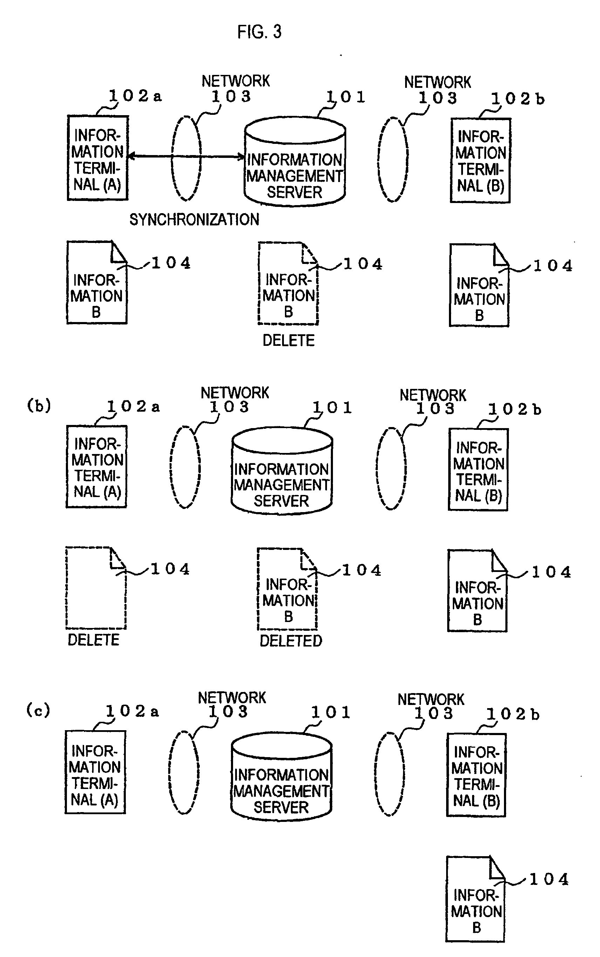

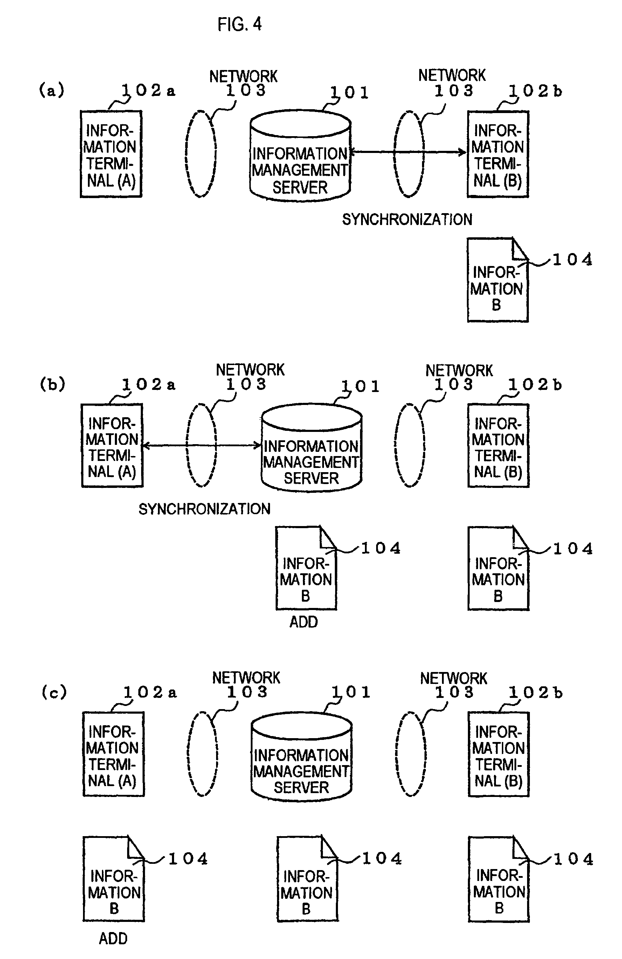

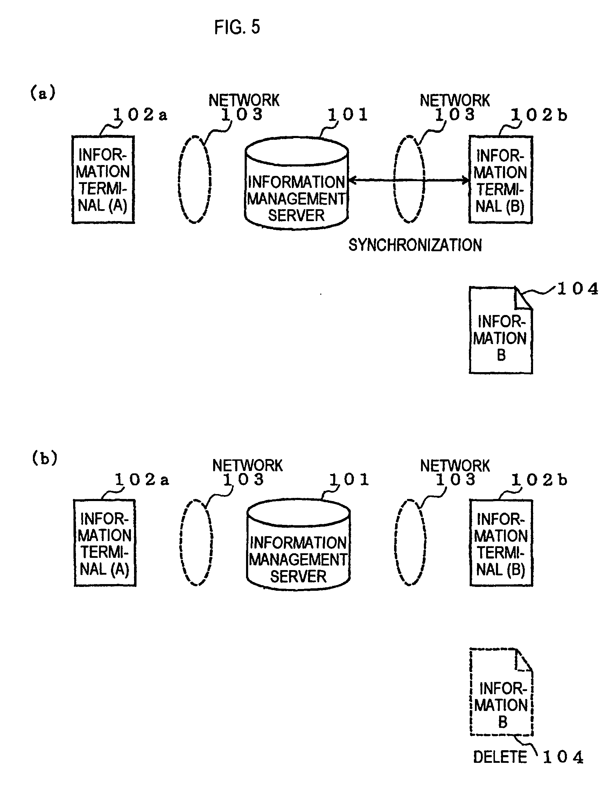

**FIG.2** illustrates a second exemplary working of a conventional information management system. **FIG.3** illustrates a third exemplary working of a conventional information management system. **FIG.4** illustrates a fourth exemplary working of a conventional information management system. **FIG.5** illustrates a fifth exemplary working of conventional information management system.

Hereinafter, referring to **FIG.2,** the description focuses on a case where the information terminal (A) **102a** and an information terminal (B) **102b** are used in the information management system. When the user wants to delete information (B) **104,** i.e., the original information (B) **104**, stored in the information management server **101**, information (B) **104** held by the terminal (A) **102a** is deleted first of all as shown in **FIG.2 (a)**. After deletion of the information (B) **104** from the terminal (A) **102a**, the server **101** is accessed by the terminal (A) **102a** for the information synchronization. By the information synchronization, as shown in **FIG.2 (b),** the original information (B) **104** in the server **101** is deleted on one hand. However, on the other hand, as shown in **FIG.2** (c), information (B) **104** still remains in the terminal (B) **102b**. In this case, it is difficult to judge whether the information (B) **104** in the terminal (B) **102b** is one of having already been stored before the information synchronization is done or one of being newly stored after the information synchronization is done.

Further, there is a case where the server **101** is directly accessed from an outside information terminal (not shown) and thereby new original information is directly stored into the server **101** or the original information having already been stored in the server **101** is updated. Additionally, in this case, the original information in the server **101** may be deleted directly by means of the outside information terminal as shown in **FIG.3** (a).

When the server **101** with the information (B) **104** deleted is accessed and synchronized with the terminal (A) **102a** as shown in **FIG.3 (a),** the information (B) **104** in the terminal (A) **102a** is deleted as shown in **FIG.3 (b)** on one hand. However, on the other hand, as shown in **FIG.3** (c), information (B) **104** still remains in the terminal (B) **102b**. In this case, it is difficult to judge whether the information (B) **104** in the terminal (B) **102b** is one of having already been stored before the information synchronization is done or one of being newly stored after the information synchronization is done.

Under such situation shown in **FIG.2(c)** or **FIG.3 (c)**, there is a possibility that the server **101** is accessed and synchronized with the terminal (B) **102b** as shown in **FIG.4 (a).** In such case, as shown in **FIG.4 (b)**, the information (B) **104** in the terminal (B) **102b** is copied and added to the server **101**. In this situation, further, if the terminal (A) **102a** accesses and synchronizes with the server **101**, the information (B) **104** in the server **101** would be further copied and added to the terminal (A) **102a** as shown in **FIG. 4(c).** That is, the original information (B) **104** having been deleted once is restored or brought back to its initial condition.

However, such restoration will be preventable if the information management system is one of controlling the information synchronization so that the information having already deleted from one storage device cannot be copied to another storage device. For example, as shown in **FIG.5 (a)**, if the server **101** without the information (B) **104** is accessed and synchronized with the terminal (B) **102b,** the information (B) **104** in the terminal (B) **102b** cannot be copied to the server **101** but deleted from the terminal (B) **102b** as shown in **FIG.5 (b)**.

In other circumstances, however, said restoration-preventable information management system causes inconvenience: the server **101** rejects to store new information.

For solving the above problem peculiar to the conventional information management system, the present invention provides an information management system, an information management system server, and an information management terminal; whereby synchronization (conformity) between two pieces of information respectively held by the information terminal and the information management server may be maintained irrespective of an information-deletion process.

### [Disclosure of the Invention]

For solving the above problem peculiar to the conventional information management system, the present invention provides an information management system, comprising: an information terminal including an input device from which information is inputted, a storage device in which the information is stored, and transmit-receive device; a server including a storage device into which the information is stored and a transmit-receive device, whereby doing information-synchronization with the information terminal; and wherein the information held by the storage device in the information terminal is deleted upon set of a deletion flag as to the information held by the storage device in the server.

With the information management system in aforesaid composition, synchronization (conformity) between the information stored in the server and the information terminal is maintained.

There is another information management system according to the present invention, wherein the information held by the storage device in the server is not deleted irrespective of the deletion flag.

There is other information management system according to the present invention, wherein there exists a plurality of the information terminals, and further wherein the information held by the storage device in one of the information terminals is deleted upon deletion of the information held by the storage device in other of the information terminals.

Further, there is other information management system according to the present invention, comprising: an information terminal including an input device from which information is inputted and a transmit-receive device; a server including a storage device into which the information is stored and a transmit-receive device, whereby communicating with the information terminal; and wherein a deletion flag as to the information held by the storage device in the server is set when a delete command as to the information held by the storage device in the information terminal is entered into the information terminal.

There is an information management system server, comprising: a transmit-receive device that communicates with an information terminal; a storage device into which information held by the information terminal is stored; and wherein information synchronization with the information terminal is done, and thereby a deletion flag as to the information stored in the storage device is set upon deletion of the information held by the storage device in the information terminal.

There is another information management system server, wherein the information held by the storage device is not deleted irrespective of the deletion flag.

There is an information management system terminal, comprising: a transmit-receive device that communicates with a server; a storage device into which information held by the server is stored; and wherein information synchronization with the server is done, and thereby the information stored in the storage device is deleted upon set of a deletion flag as to the information held by the server.

### [Brief Description of the Drawings]

**FIG.1** illustrates a first exemplary working of a conventional information management system.
**FIG.2** illustrates a second exemplary working of a conventional information management system.
**FIG.3** illustrates a third exemplary working of a conventional information management system.
**FIG.4** illustrates a fourth exemplary working of a conventional information management system.
**FIG.5** illustrates a fifth exemplary working of a conventional information management system.

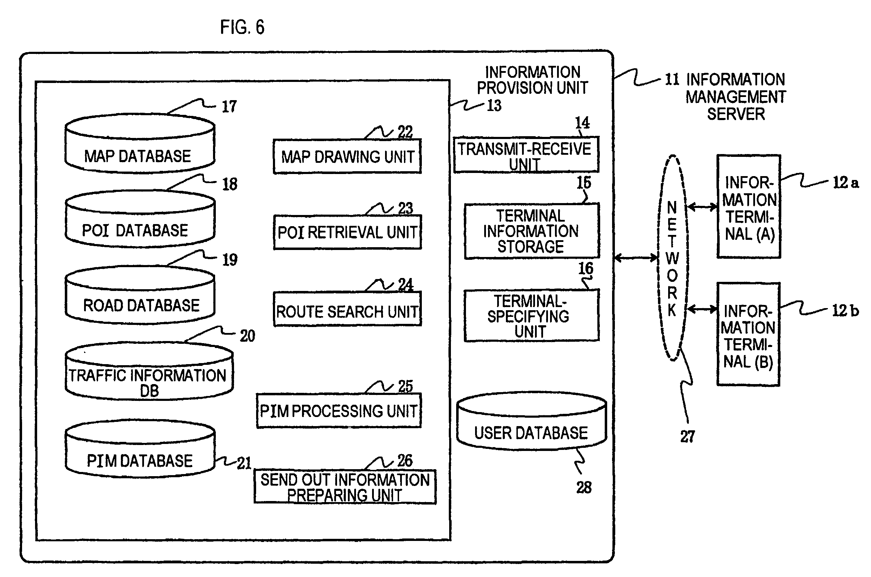

**FIG. 6** is a conceptual drawing of composition of an information management system according to a first embodiment of the present invention.

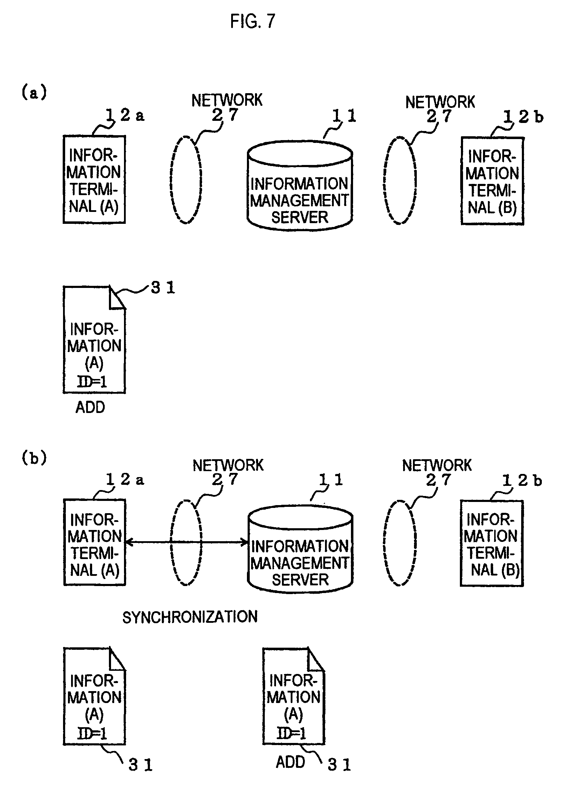

**FIG. 7** illustrates a first exemplary process of information-addition carried out by the information management system according to the first embodiment of the present invention.

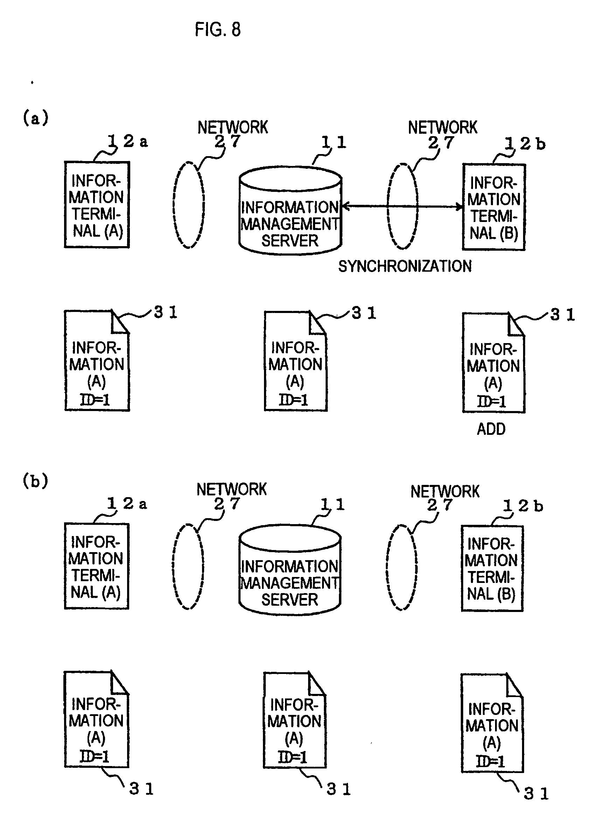

**FIG. 8** illustrates a second exemplary process of information-addition carried out by the information management system according to the first embodiment of the present invention.

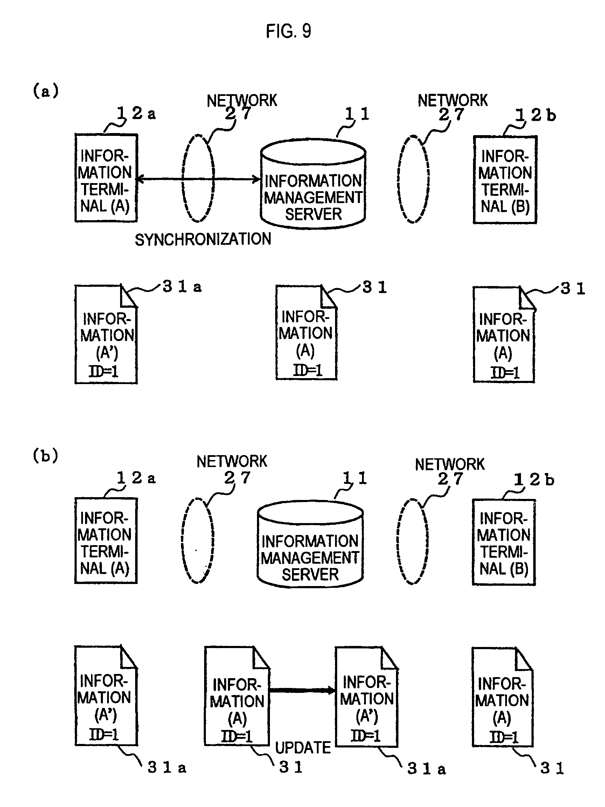

**FIG. 9** illustrates a first exemplary process of information-update carried out by the information management system according to the first embodiment of the present invention.

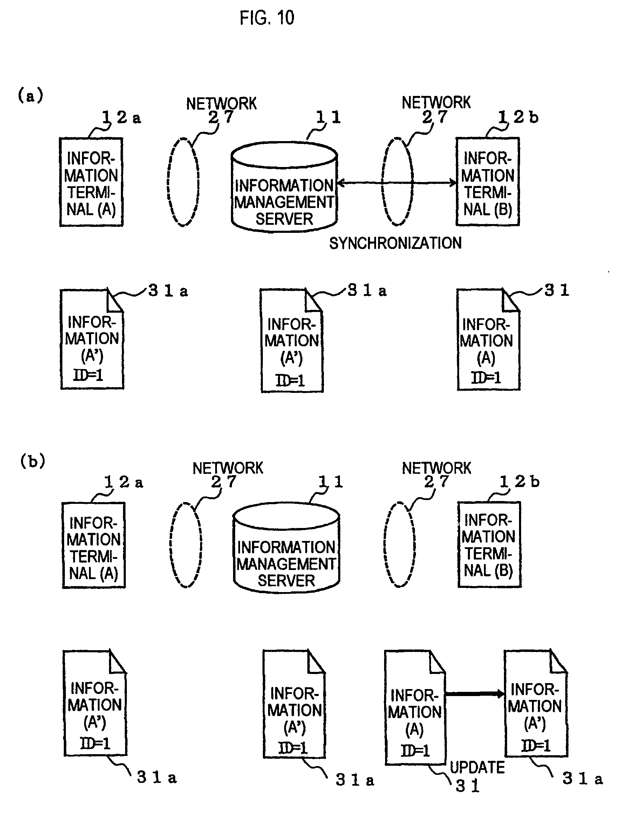

**FIG. 10** illustrates a second exemplary process of information-update carried out by the information management system according to the first embodiment of the present invention.

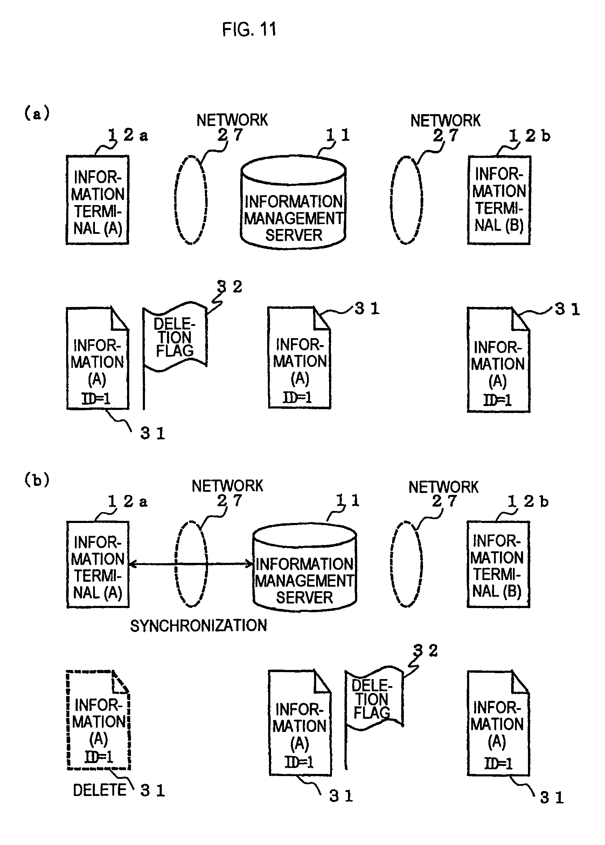

**FIG. 11** illustrates a first exemplary process of information-deletion carried out by the information management system according to the first embodiment of the present invention.

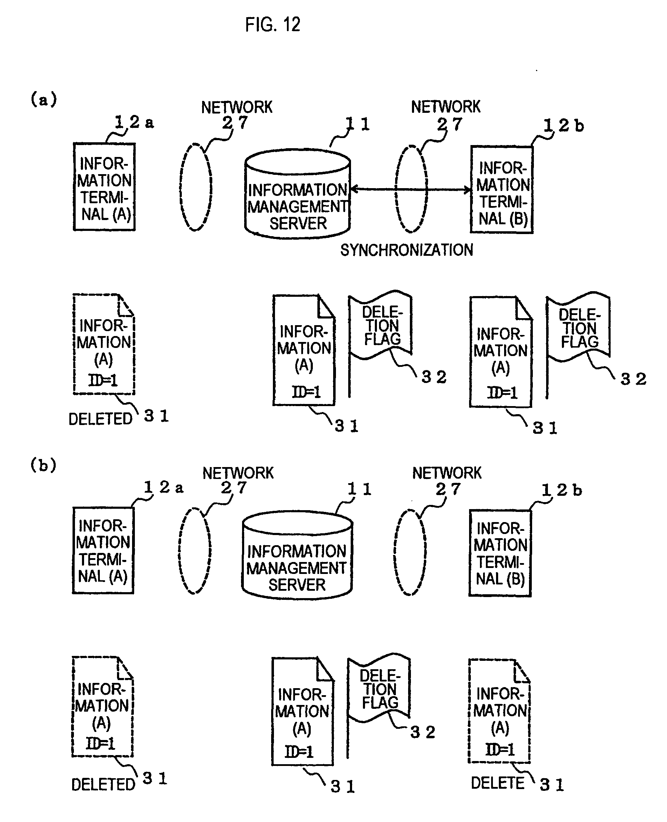

**FIG. 12** illustrates a second exemplary process of information-deletion carried out by the information management system according to the first embodiment of the present invention.

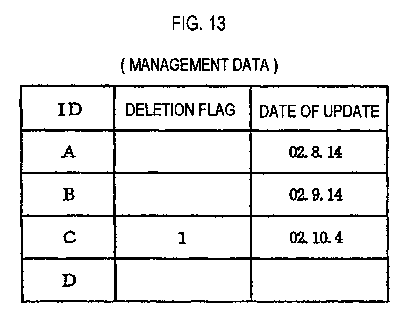

**FIG. 13** illustrates compositions of management data used in an information management system according to a second embodiment of the present invention.

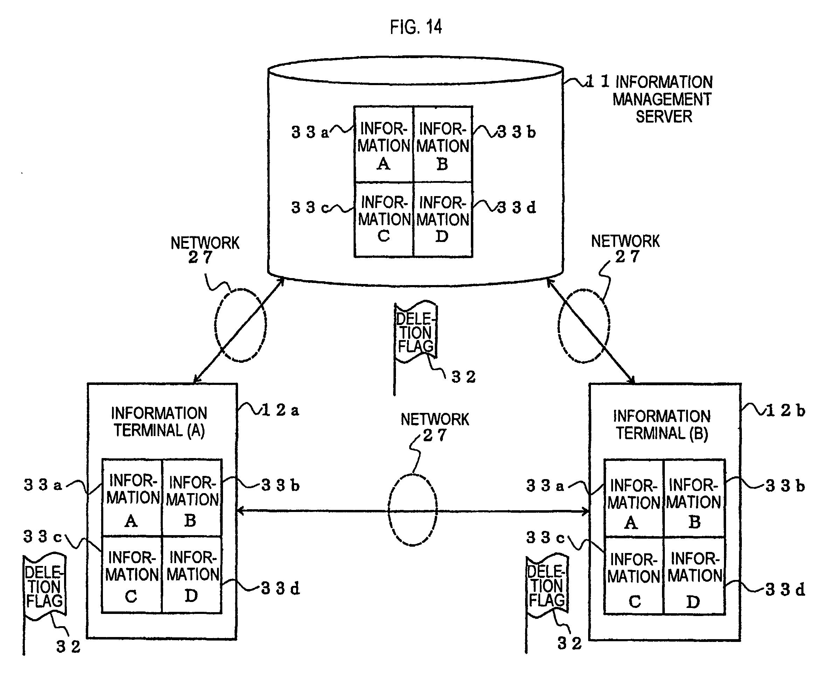

**FIG. 14** illustrates a process of information-deletion carried out by the information management system according to the second embodiment of the present invention.

### [Description of the Preferred Embodiment]

Embodiments according to the present invention will be described hereinafter in detail with reference to the accompanying drawings.

A first embodiment of the present invention is described referring to **FIG. 6** as a conceptual drawing of composition of the information management system.

In **FIG. 6**, there shown an information management server **11** constructed in a computer which comprising; an arithmetic means such as a CPU or a MPU, storage means such as a semiconductor memory, a magnetic disk, or an optical disk, and a communication interface. The computer may not be limited to a single computer, rather may be so-called a decentralized server in which a plurality of computers are systematically connected one after the other. In the case of the decentralized server, for example, the server **11** comprises a Web server used in HTTP (Hyper Text Transfer Protocol)-based communication over a network **27** (described later), a main server performing main functions of the server **11**, a mirror server performing almost the same functions as the server **11**, an user management server to manage user-attributive information or the like that is preliminarily registered with the server 11, and a conversion server by which HTTP and a protocol of CORBA(Common Object Request Broker Architecture) used in inter-server communications are converted to each other. Further, any other system may be constructed within said computer. Alternatively, the information management server 11 may be any one of systems constructed in other computers.

Further, in **FIG. 6,** there shown an information terminal (A) **12a** and an information terminal (B) **12b**, both of which are user-operable. Although a plurality of the information terminals may be used actually in the present information management system, here, only two terminals (the information terminal (A) **12a** and the information terminal (B) **12b**) are taken as examples in the present embodiment for convenience of explanation. The user may be a driver or a fellow passenger of a vehicle such as an automobile, a truck, a bus, or a motorcycle; further the user may be a pedestrian, a user of public transportation, or possible anyone. To use the information management system, each user must be preliminarily registered with the server **11** and accordingly given an ID; not only the user but also each of the terminal (A) **12a** and the terminal (B) **12b** must be preliminarily registered with the server **11** and accordingly given an ID.

Each of the information terminal (A) **12a** and the information terminal (B) **12b** comprising: an arithmetic device such as a CPU or a MPU; a storage device such as a semiconductor memory, a magnetic disk, an optical disk, or the like; a display device such as a liquid crystal display, a LED (Light Emitting Diode) display, a CRT, or the like; an input device such as a keyboard, a joystick, a cross-key, a push-button, a remote control unit, a touch panel, or the like; a display control device by which said display device is controlled; and a transmit-receive device such as a communication interface. On one hand, either the terminal (A) **12a** or the terminal (B) **12b** is considered as a navigation apparatus aboard a vehicle such as an automobile, a truck, a bus, and a motorcycle. On the other hand, either the terminal (A) **12a** or the terminal (B) **12b** may be any of the following apparatuses; a stationary telephone, a portable telephone, a personal handy phone (used in PHS: Personal Handy-Phone System constructed by NTT, or Nippon Telegraph and Telephone Corporation), a portable information terminal, a PDA (Personal Digital Assistant), a personal computer, a game machine, and a digital television.

Furthermore, each of the terminal (A) **12a** and the terminal (B) **12b** may include a present position detective device (not shown). If either the information terminal **12a** or the information terminal **12b** is a navigation apparatus for example, said present position detective device detects a present position of the vehicle by using a GPS (Global Positioning System), a terrestrial magnetism sensor, a distance sensor, a steering sensor, a beacon sensor, a gyro sensor, or the like. If either the terminal **12a** or the terminal **12b** is a portable telephone or a portable information terminal for example, the present position detective device detects a position of a base station of the portable telephone or the portable information terminal as a present position. This detection is based on communication with the base station which covering an area where the portable telephone or the portable information terminal exists.

Under the foregoing composition, the information provision server **11** and each of the terminal (A) **12a** and the terminal (B) **12b** are communicated with each other over a network **27**. The network **27** may be a wire/wireless public switched network, a private communication network, a portable telephone network, the Internet, an intranet, a LAN (Local Area Network), a WAN (Wide Area Network), a satellite communication network, any possible communication networks, or a certain combined network comprised of said various networks. Further, the server **11** may be communicated with each of the terminal (A) **12a** and the terminal (B) **12b** in CS (Communication Satellite) broadcasting or BS (Broadcasting Satellite) broadcasting, also may be communicated in ground wave digital television broadcasting or FM (Frequency Modulation) multiplex broadcasting. Alternatively, the server **11** may be communicated with each of the terminal (A) **12a** and the terminal (B) **12b** by using an optical beacon or a radio wave beacon generated from roadside beacon units.

As understood from the foregoing description, the information management system according to the present embodiment is mainly comprised of the information management server **11**, the information terminal (A) **12a**, and the information terminal (B) **12b**.

The information management server **11**, comprising: an information provision unit **13** from which information about a route to a destination is given to each of the information terminal (A) **12a** and the information terminal (B) **12b** in response to transmission of start point information and destination information from the terminal (A) **12a** and the terminal (B) **12b**; a transmit-receive unit **14** by which said information are intercommunicated between the terminal (A) **12a** and the terminal (B) **12b**; a terminal information storage **15** in which said information are separately stored according to each of the terminal (A) **12a** and the terminal (B) **12b;** a terminal-specifying unit **16** by which the terminal (A) **12a** and (B) **12b** are respectively specified according to IDs given in advance; and a user database **28** that stores user-attributive information such as a name, an address, gender, age, occupation, etc of the user who has already been registered with the server **11**. In other circumstances, the user database **28** may serve as a sales database that compiles data as to consumption behavior of each user or data as to goods each user bought.

The information provision unit **13** comprising: a map database **17** serving as a map information storage; a POI (Point of Interest) database **18**; a road database **19**; a traffic information database **20** serving as a traffic information storage; and a PIM (Personal Information Manage) database **21** serving as a personal information storage. If need be, any one of/some of the map database **17**, the POI database **18**, the road database **19**, and the traffic information database **20** may be left out from said composition.

The map database **17** stores map information including nodes, links, coordinates, names of facilities, or the like used for drawing a map. The POI database **18** stores facility data, telephone number-and-address data, and event data, which are used in retrieving a start point, a destination point, a passing point, or the like. The road database **19** stores data as to road search cost (here, cost means a weight given to data used in searching a road) and a road type, both of which are used in searching a route.

Further, if the information management system works under a road traffic information communication system such as a VICS (Vehicle Information and Communication System), the traffic information database **20** stores road traffic information and traffic regulatory information which are related to road congestion; these information are generated based on other source information collected by means of a traffic regulatory system controlled by the police or the Japan Highway Traffic Corporation. Moreover, it is desirable that the traffic information database **20** should store scheduled-event information as to a site and a date of the scheduled event such as a festival, a parade, a fireworks display, or the like. Further desirably, the traffic information database **20** should store statistical congestion information like "A road running around a railway station or a mega commercial facility is congested every day during certain time periods except a weekend" or "A road running around a sea-bathing resort is congested during a summer vacation." In addition, the traffic information database **20** desirably should store meteorological information such as weather information prepared by the Meteorological Agency.

The PIM database **21** stores personal files corresponding to respective users. Each personal file stores user-attributive information in the form of a schedule, a calendar, an address book, a telephone directory, a registered point list, a memo, etc. Therefore, each personal file contains attributive information files; a schedule file, a calendar file, an address file, a telephone directory file, a registered point file, a memo file, etc. Although the personal file is basically prepared for each one of the users who have already been registered with the server, it may be prepared on an information terminal basis. If one user possesses a plurality of IDs, it is possible to prepare the personal file on an ID basis.

As storage means for the information management server **11**, either an internal storage medium or an external storage medium may be used to store the map database **17**, the POI database **18**, the road database **19**, the traffic information database **20**, the PIM database **21**, and the user database **28**. Said either medium may be any one of the followings; a magnetic tape, a magnetic disk, a magnetic drum, a CD-ROM, a MD (Mini Disk), a DVD-ROM, a DVD-RAM, an optical disk, a MO (magneto-optical) disk, an IC card, an optical card, a stick memory, a memory card, or any possible media.

Further, the information provision unit **13**, comprising: a map drawing unit **22** by which a map is drawn based on the map information; a POI retrieval unit **23** by which positional information like an coordinates, an address, and a name of the designated point such as a destination are retrieved based on the information stored in the POI database **18**; and a route search unit **24** by which a route from a present position to a destination is searched based on the information stored in both the road database **19**, the traffic information database **20**, or the like. As one thinks proper, any one of/ some of the map drawing unit **22**, the POI retrieval unit **23**, and the route search unit **24** may be left out from the information provision unit **13** in view of production costs.

Furthermore, the information provision unit **13**, comprising: a PIM processing unit **25** by which the user's schedule, calendar, address book, telephone directory, registered point list, memo, or the like are prepared or updated based on the information sent from each of the terminal (A) **12a** and the terminal (B) **12b**, and further by which some information included in said user's schedule, calendar, address book, telephone directory, registered point list, memo, etc are extracted; and a send-out information preparing unit **26** by which information to be transmitted to each of the terminal (A) **12a** and the terminal (B) **12b** is prepared or edited.

And further, the information provision unit **13,** comprising: a destination setting unit, a predictive arrival time calculating unit, and a comparing unit (these are not shown). Additionally, the information provision unit **13** stores several programs such as a PIM program, a route search program, etc. The PIM program may be any one of commercially available programs intended for the portable information terminal, the PDA, or the personal computer, which manageing a personal schedule, calendar, address book, telephone directory, registered point list, memo, etc.

In operation, once the positional information such as a destination, a passing point, or a registered point is inputted into the user's schedule, calendar, or registered point list, the destination setting unit sets a destination based on said positional information. Further, the predictive arrival time calculating unit calculates predictive arrival time, i.e. the time when the vehicle arrives at the destination. This calculation is based on information as to a route searched by the route search unit **24**; for example, the sum of each time necessary for traveling each road section in the route. Further, the predictive arrival time calculating unit may be one of updating the predictive arrival time at specific intervals. In such update, the predictive arrival time may be recalculated in consideration of the latest congestion information as well as the latest traffic regulatory information stored in the traffic information database 20. Subsequently to the update of the predictive arrival time, the comparing unit compares the predictive arrival time with user's desired arrival time.

Each of the terminal (A) **12a** and the terminal (B) **12b** includes a transmit-receive unit (not shown) by which the information in the schedule, calendar, address book, telephone directory, registered point list, or memo are transmitted/received, together with other information, to/from the server **11**. Further, each of the terminal (A) **12a** and the terminal (B) **12b** includes a display control device (not shown). The display control device controls the display of the calendar and the map, both of which are transmitted from the server 11, onto the display device. With such display control, a present position of each of the terminal (A) **12a** and the terminal (B) **12b**, a destination, a facility located around said present position, etc are displayed onto the map. It is desirable that information such as the desired arrival time, the predictive arrival time, a destination name, a destination address, or the like should be also displayed onto the map.

In the first embodiment, the information management server **11** comprising the map database **17**, the PIM database **21**, the route search unit **24**, and the PIM processing unit **25**; whereby the route search as well as the preparing or updating of the schedule, the calendar, the address book, the telephone directory, the registered point list, the memo, or the like may be performed in response to a request from each of the terminal (A) **12a** and the terminal (B) **12b**. In return for such request, the results of said route search, preparation, or update may be transmitted back to each of the terminal (A) **12a** and the terminal (B) **12b**. The data communication using the server **11** in aforesaid composition contributes to simplification of the composition of each of the information terminal (A) **12a** and (B) **12b**. That is, each of the terminal (A) **12a** and the terminal (B) **12b** can be miniaturized, which allowing a reduction of manufacturing cost of the information terminals.

In other circumstances, each of the terminal (A) **12a** and the terminal (B) **12b** may include databases such as the map database **17** and the route search unit **24** so as to carry out route search. Thereby, the composition of the server **11** can be simplified and running costs for the information management system may be lowered.

Alternatively, not the server **11** but each of the terminal **12a** and **12b** may include the POI database **18,** the road database **19,** the traffic information database **20,** the PIM database **21,** the POI retrieval unit **23,** the PIM processing unit **25,** the destination setting unit, the predictive arrival time calculating unit, and the comparing unit. In this case, the information display system does not need the information provision server **11**.

Hereinafter, working of the information management system in the aforesaid composition will be described.

Here, an assumption is made that the information management server **11** comprises the map database **17**, the PIM database **21**, the route search unit **24**, and the PIM processing unit **25**. The server **11** in said composition performs route search, preparation of and update to the schedule, calendar, address book, telephone directory, registered point list, and memo, in response to a request from the terminal (A) **12a**. The results of said route search, preparation, and update are transmitted back to the terminal (B) **12b** in return. Further, an assumption is made that the terminal (A) **12a** is a portable telephone/a PHS telephone and the terminal (B) **12b** is a navigation apparatus aboard a vehicle; each of the terminal (A) **12a** and the terminal (B) **12b** is used by the same one person.

Hereinafter, the description focuses on a case where the terminal (A) **12a** is operated to add new personal information, for example, a new schedule.

Said personal information is not limited to the schedule. The personal information may be a calendar, address book, telephone directory, registered point list, memo, or the like.

**FIG. 7** illustrates a first exemplary process of information-addition carried out by the information management system according to the first embodiment of the present invention. **FIG. 8** illustrates a second exemplary process of information-addition carried out by the information management system according to the first embodiment of the present invention.

To begin with the information-addition, the PIM program stored in the terminal (A) **12a** is launched to produce a personal information input view onto the display device in the terminal (A) **12a**. If the PIM program is not stored in the terminal (A) **12a**, the server **11** is accessed from the terminal (A) **12a** over the network **27**. Upon this access, the PIM program stored in the server **11** is started and thereby the personal information input view appears on the display device in the terminal (A) **12a**.

For input of the information (A) **31**, the personal information input view is provided with input fields into which details of the information (A) **31** is inputted. The details of the information (A) **31** are, for example, a date of the schedule, a point of the schedule, and a memo about the schedule. It is desirable that said information should be inputted on a syllable-by-syllable basis from a Japanese syllable input palette. Furthermore, it is desirable that a numeral input palette should appear in inputting a telephone number, an address, or the like on a numeral-by-numeral basis. Alternatively, the personal information input view may have a single input field into which the information (A) **31** is inputted in the form of text. Being inputted, the information (A) **31** is added to one of files organized in the storage device included in the terminal (A) **12a** as shown in **FIG. 7** (a).

Upon addition of the information (A) **31**, the information in the terminal (A) **12a** and the information in the server **11** are synchronized with each other. In other words, information synchronization between the terminal (A) **12a** and the server **11** is done. This synchronization may be automatically done each time the terminal (A) **12a** is switched-on. Alternatively, the information synchronization may be automatically done each time the information is newly inputted or updated. Otherwise, the information synchronization may be automatically done at specific intervals, for example, at one-hour intervals or at one-day intervals.

In the information synchronization, send-out information is transmitted from the terminal (A) **12a** to the server **11** over the network **27**. The send-out information contains the followings: an ID key that represents an ID given to the information stored in each of the files organized in the storage device included in the terminal (A) **12a**, a date when the information was updated, and the like. Said send-out information is received in the transmit-receive unit **14**. Then, in order to identify the personal file corresponding to the terminal (A) **12** and stored in the PIM database **21**, the terminal-specifying unit **16** starts to extract the ID key from the send-out information. Each personal file is prepared in such a manner that it corresponds to each ID key that represents the ID given to each user or terminal.

After the terminal-specifying unit **16** identifies the personal file corresponding to the terminal (A) **12a**, the PIM processing unit **25** accesses the identified personal file. Accessing the identified personal file, the PIM processing unit **25** extracts ID keys of already-existing information having been stored in the personal file and further extracts a date when each piece of the already-existing information was stored in the personal file. Then, among the extracted ID keys of the already-existing information and the extracted date thereof, the PIM processing unit **25** selects the already-existing information whose ID key is identical with the ID key of the information stored in the terminal (A) **12a**. Thereupon, the PIM processing unit **25** compares the date of the update to the selected already―existing information in the server **11** with the date of the update to the information stored in the terminal (A) **12a**.

If the comparison finds that the date of the update to the already-existing information in the server **11** is later than the date of the update to the information stored in the terminal (A) **12a**, the already-existing information is overwritten by the information in the terminal (A) **12a**. On the contrary, if the comparison finds that the date of the already-existing information is earlier than the date of the update to the information stored in the terminal (A) **12a**, the information in the terminal (A) **12a** is overwritten by the already-existing information stored in the personal file.

There is a case where said comparison is not made when one storage device stores the information while another storage device stores no information. In this case, the information stored in one storage device is copied and added to another storage device. For example, assume that the user inputs the information (A) **31** (for example, a new schedule) into the terminal (A) **12a**. In this case, the already-existing information whose ID key is identical with the ID key (ID=1) of said information (A) **31** does not exist in the personal file in the server **11**. Therefore, as shown in FIG. **7(b)**, the information (A) **31** is copied and sent from the terminal (a) **12a** to the personal file in the server **11** under the information synchronization.

Thereupon, when the information-synchronization between the terminal (B) **12b** and the server **11** is done just as in the case of **FIG. 7 (b),** the information (A) **31** in the server **11** is further copied and added to the terminal (B) **12b** as shown in **FIG. 8 (a)**. As a result, as shown in **FIG. 8 (b),** each piece of the information (A) **31** is stored into each of the server **11,** the terminal (A) **12a**, and the terminal (B) **12b**. This allows the user to view and check details of the information (A) **31** every time he/she operates either the terminal (A) **12a** or the terminal (B) **12b**. Please note that the information (A) **31** stored in the server **11** is always treated as the original, i.e., the original information (A) **31**.

In other circumstances, the user is allowed to access the server **11** directly from each of the terminal (A) **12a**, the terminal (B) **12b**, or other terminal (not shown) in order to input the information (a) **31** into the server **11** without the information synchronization process.

Next, the description focuses on a case where the terminal (A) **12a** is operated to update the information (A) **31** having already been stored in the storage device.

**FIG. 9** illustrates a first exemplary process of information-update carried out by the information management system according to the first embodiment of the present invention. **FIG. 10** illustrates a second exemplary process of information-update carried out by the information management system according to the first embodiment of the present invention.

When a scheduled plan needs to be changed, the user would operate the terminal (A) **12a** so as to let the personal information input view show the information (A) **31** stored in its storage device. From the personal information input view, the details of the information (A) **31**, for example, a scheduled date, a point of schedule, or the like is changed. As a result, the information (A) **31** stored in the terminal (A) **12a** is updated and turned into information (A') **31a**.

Then, as shown in **FIG. 9(a)**, the information synchronization is done between the terminal (A) **12a** and the server **11.** In the information synchronization, as described above, the PIM processing unit **25** accesses a personal file, which stored in the PIM database **21,** identified by the terminal-specifying unit **16.** Accessing the identified personal file, the PIM processing unit **25** extracts ID keys of already-existing information having been stored in the personal file and further extracts a date when each of said already-existing information was stored into the personal file. Then, among the extracted ID keys of the already-existing information and the extracted date thereof, the PIM processing unit **25** selects the already-existing information whose ID key is identical with the ID key of the updated information (A') **31** in the terminal (A) **12a**. In this case, for example, if the comparison finds that the ID key (ID=1) of the information (A) **31** (among the already-existing information) is identical with the ID key of the information (A') **31,** however, the date of the update to such information (A) **31** is earlier than the date of the update to the information (A') **31**, the information (A) **31** in the server **11** is updated with the information (A') **31** as shown in **FIG. 9(b)**.

After updating the information (A) **31** in the server **11,** the information synchronization between the terminal (B) **12b** and the server **11** is done as shown in **FIG. 10 (a)**. As a result, as shown in **FIG. 10 (b),** the information (A) **31** in the terminal (B) **12b** is updated with the information (A') **31.**

In other circumstances, the user is allowed to access the server **11** directly from each of the terminal (A) **12a**, the terminal (B) **12b**, and other terminal (not shown) in order for the information (A) **31** in the server **11** to be updated with the information (A') **31a** without using the information synchronization.

Next, the description focuses on a case where the terminal (A) **12a** is operated to delete the information (A) **31** having already been stored in the storage device.

**FIG. 11** illustrates a first exemplary process of information-deletion carried out by the information management system according to the first embodiment of the present invention. **FIG. 12** illustrates a second exemplary process of information-deletion carried out by the information management system according to the first embodiment of the present invention.

Feeling that the information (A) **31**, i.e., the schedule stored in each of the terminal (A) **12a**, the terminal (B) **12b**, and the server **11**, becomes unnecessary, the user operates terminal (A) **12a** and inputs a delete command to delete the information (A) **31**. Upon input of the delete command, a deletion flag **32** is set as to the information (A) **31**.

When the information synchronization between the terminal (A) **12a** and the server **11** is done, both the ID key (ID=1) of the information (A) **31** and the deletion flag **32** thereto are sent from the terminal (A) **12a** to the server **11.** Upon receipt of them, the PIM processing unit **25** in the server **11** extracts the already-existing information (i.e., the original information **31** (A)) whose ID key is the same as the ID key of the information (A) **31.** Then, as shown in **FIG. 11 (b),** the deletion flag **32** is set as to the original information **31** (A). Thus, the information **31** (A) in the terminal (A) **12a** is deleted after the information synchronization has been done. On the contrary, the original information (A) **31** in the server **11** is not deleted but still remains therein even after the information synchronization with the terminal (A) **12a**.

When the synchronization between the terminal (B) **12** and the server **11** is subsequently done, as shown in **FIG. 12 (a)**, both the ID key (ID=1) of the original information (A) **31** and the deletion flag **32** thereto are sent from the server **11** to the terminal (B) **12b.** As a result, the information (A) **31** in the terminal (B) **12b** is deleted as shown in **FIG. 12 (b)**.

In other circumstances, the user is allowed to access the server **11** directly from each of the terminal (A) **12a**, the terminal (B) **12b**, or other terminal (not shown) without using the information synchronization, in order to set the deletion flag **32** to delete the original information terminal (A) **31** from the server **11**.

As aforesaid, according to the first embodiment, the original information (A) **31** in the server **11** can remain therein even though it is subjected to the set of the deletion flag **32**. This prevents an erroneous copy of the information (A) **31** from the terminal (B) **12b** to the server **11** irrespective of the information synchronization between the terminal (B) **12b** and the server **11** after the information (A) **31** is deleted from the terminal (A) **12a**. In contrast to the original information (A) **31** that remains in the server **11**, the information (A) **31** in the terminal (B) **12b** is deleted completely.

Thus, even if the information-deletion is carried out, the synchronization (conformity) among pieces of information respectively stored in the terminal (A) **12a**, the terminal (B) **12b**, and the server **11** can be maintained.

Each piece of the deleted information is accumulatively saved in the PIM database **21** in the server **11** every time the information-deletion process is carried out. This causes a taking-up of amounts of space of the PIM database **21**. However, such taking-up produces no serious problem because the storage device in the server **11** is bulk in its memory resource size. If the storage device in the server **11** is fully taken up by the deleted information and it causes a problem wherein a space for other information is limited, it is possible to forcefully empty the deleted information from the server **11** when certain time has elapsed since the information was deleted. In other circumstances, if the deleted information takes up the storage device in the server **11** beyond a given space, it is possible to empty the deleted information from the server **11** in order of occurrence of the deletion. For aforesaid processes concerning the information-empting, it is desirable that the server **11** should include a management file or a management database into which the deletion flag, the ID key of the deleted information, or the like is stored.

Further, it is possible to empty the deleted information from the server **11** immediately upon its deletion. For this immediate emptying process, it is also desirable that the server **11** should include a management file or a management database into which the deletion flag, the ID key of the deleted information, or the like is stored.

According to the first embodiment, the deletion flag **32** is transmitted from one storage device to another under the information synchronization. However, instead of the deletion flag **32**, it may be possible to transmit, from one storage device to another, special information notifying that the information has been deleted.

Hereinafter, a second embodiment according to the present invention will be described referring to **FIG. 13** and **FIG. 14**. In the interests of the simplicity, the same compositions and the same operations according to the first embodiment are not described.

**FIG. 13** illustrates a composition of management data used in an information management system according to a second embodiment of the present invention. **FIG. 14** illustrates a process of information-deletion carried out by the information management system according to the second embodiment of the present invention.

According to the first embodiment, it is difficult to maintain the synchronization (conformity) between the terminal (A) **12a** and the terminal (B) **12b** if the information synchronization is done directly between them during the information-deletion process. To avert such inconformity, according to the second embodiment, each of the terminal (A) **12a** and the terminal (B) **12b** includes management data, as shown in **FIG. 13**, to mange the information stored therein. It is desirable that not only the terminals but also the server **11** should include the management data.

In **FIG. 13**, the management data contains an ID, a deletion flag, and a date of update. An "ID" column shows IDs by which the information stored in each of the terminal (A) **12a**, the terminal (B) **12b**, and the server **11** is identified. A "Deletion flag" column tells whether the deletion flag **32** is set or not. A "Date of update" column shows a date (year/month/day) when the information was updated. In the "Deletion flag" column, "1" means that the deletion flag **32** has been set. If the deletion flag **32** has not been set, the "Deletion flag" column is blank.

In the second embodiment as shown in **FIG. 14**, the terminal (A) **12a**, the terminal (B) **12b**, and the server **11**, each of which including information (A) **33a**, information (B) **33b**, information (C) **33c**, and information (D) **33d**, is designed to synchronize with one another. If the information (C) 33c having already been stored in the server 11 becomes unnecessary to the user, he/she operates the terminal (A) **12a** to input the delete command as to the information (C) **33c** stored in the terminal (A) **12a**. Upon input of the delete command, as shown in **FIG. 13**, the "Deletion flag" column of the information (C) **33c** shows "1" indicating that the deletion flag **32** has been set. Then, the information (C) **33c** in the terminal (A) **12a** is deleted.

Upon deletion of the information (C) **33c** from the terminal (A) **12a**, the information synchronization between the terminal (A) **12a** and the server **11** is started. In the information synchronization, referring to the management data as to the terminal (A) **12a**, both the ID key (ID=C) of the information (C) **33c** and the deletion flag **32** thereto are transmitted from the terminal (A) **12a** to the server **11**. Thereupon, the PIM processing unit **25** in the server **11** sets the deletion flag **32** and therewith "Deletion flag" column of information (C) **33c** tells it as shown in **FIG. 13**. However, irrespective of the deletion flag **32**, the original information (C) **33c** is not deleted from the server **11** but still remains therein.

After the deletion flag **32** is set as to the information (C) **33c** in the server **11,** the information synchronization is done directly between the terminal (A) **12a** and the terminal (B) **12b**. In this synchronization, referring to the management data as to the terminal (A) **12a**, the ID key (ID=C) of the information (C) **33c** and the deletion flag **32** thereto are transmitted from the terminal (A) **12a** to the terminal (B) **12b**. Thereupon, the "Deletion flag" column of the information (C) **33c** in the management data as to the terminal (B) **12b** tells it as shown in **FIG. 13**. Then, the information (C) **33c** in the terminal (B) **12b** is deleted.

As aforesaid, according to the second embodiment, the synchronization (conformity) between the terminal (A) **12a** and the terminal (B) **12b** may be maintained even if the information synchronization is done directly between the terminal (A) **12a** and the terminal (B) **12b** during the information-deletion process.

The amount of the management data is small compared to any one of the information (A) **33a**, (B) **33b**, (C) **33d**, and (D) **33d**. Therefore, it is possible to store the management data in the storage device in each of the terminal (A) **12a** and the terminal (B) **12b** whose memory resource is small. If need be, "Date of update" may be left out from the management data. In other circumstances, "Date of update" may be referred as a criterion of judgment whether to delete the management data. (For example, referring to the "Date of update," the user can decide to forcefully empty the deleted information from the storage device when certain time has elapsed since the information was deleted.)

Further, when the information included in the management data held by one information terminal (for example, the information terminal (A) **12a**) is not included in another management data held by another information terminal (for example, the information terminal (B) **12b**), the information held by one terminal can be copied and added to another information terminal unless the deletion flag **32** is set as to the information held by one terminal.

The foregoing invention has been described in terms of preferred embodiments. However, those skilled in the art will recognize that many variations of such embodiments exist. Such variations are intended to be within the scope of the present invention and the appended claims.

### [Industrial applicability]

The present invention relates to an information management system, an information management system server, and an information management system terminal.

## Claims

1. An information management system, comprising:
(a) an information terminal including an input device from which information is inputted, a storage device in which the information is stored, and transmit-receive device;
(b) a server including a storage device into which the information is stored and a transmit-receive device, whereby doing information-synchronization with the information terminal; and
c) wherein, the information held by the storage device in the information terminal is deleted upon set of a deletion flag as to the information held by the storage device in the server.

2. The information management system according to claim 1, wherein the information held by the storage device in the server is not deleted irrespective of the deletion flag.

3. The information management system according to any one of claims 1-2, wherein there exists a plurality of the information terminals, and further wherein the information held by the storage device in one of the information terminals is deleted upon deletion of the information held by the storage device in other of the information terminals.

4. An information management system, comprising:
(a) an information terminal including an input device from which information is inputted and a transmit-receive device;
(b) a server including a storage device into which the information is stored and a transmit-receive device, whereby communicating with the information terminal; and
(c) wherein, a deletion flag as to the information held by the storage device in the server is set when a delete command as to the information held by the storage device in the information terminal is entered into the information terminal.

5. An information management system server, comprising:
(a) a transmit-receive device that communicates with an information terminal;
(b) a storage device into which information held by the information terminal is stored; and
(c) wherein, information synchronization with the information terminal is done, and thereby a deletion flag as to the information stored in the storage device is set upon deletion of the information held by the storage device in the information terminal.

6. The information management system according to claim 5, wherein the information held by the storage device is not deleted irrespective of the deletion flag.

7. An information management system terminal, comprising:
(a) a transmit-receive device that communicates with a server;
(b) a storage device into which information held by the server is stored; and
(c) wherein, information synchronization with the server is done, and thereby the information stored in the storage device is deleted upon set of a deletion flag as to the information held by the server.
